# FASCICULE DE BREVET EUROPEEN

(11) **EP 0 480 945 B1**
(45) Date de publication et mention de la délivrance du brevet: **05.10.1994**
(21) Numéro de dépôt: 90909453.4
(22) Date de dépôt: 12.06.1990
(51) Int. Cl.: A45C 11/18, G06F 15/02

(54) **ETUI MEMENTO POUR CARTE DE CREDIT OU ANALOGUE**
MEMENTO-ETUI FÜR SCHECKKARTEN ODER DERGLEICHEN
MEMORY HOLDER FOR CREDIT CARD OR THE LIKE

(30) Priorité: 20.06.1989 FR 8908168
(43) Date de publication de la demande: 22.04.1992
(73) Titulaire: REY, Jean-Yves, F-37100 Tours (FR)
(72) Inventeur: REY, Jean-Yves, F-37100 Tours (FR)
(74) Mandataire: Ores, Irène
(86) Numéro de dépôt international: FR9000411
(87) Numéro de publication internationale: WO9015551

(56) Documents cités:
- AU-B- 46 568
- DE-A-37 093 99
- DE-U-87 145 28
- JP-A-62 057 062
- US-A- 4 277 837
- US-A- 4 587 409

## Description

La présente invention concerne un étui pour une carte de crédit, une carte bancaire, une carte à prépaiement ou analogue.

Les cartes de crédit, les cartes bancaires, les cartes à pré-paiement ou analogues présentent, pour leur utilisateur, le grave inconvénient de ne pas comporter d'indication visuelle du montant et de la date des opérations effectuées et du solde restant disponible, de sorte que l'utilisateur doit tenir indépendamment un relevé des opérations qu'il effectue.

La plupart des utilisateurs, même lorsqu'ils tiennent de tels relevés, ce qui n'est pas toujours le cas, oublient fréquemment d'enregistrer des opérations, de sorte qu'il leur est ensuite difficile de rétablir le montant exact de leurs dépenses et de connaître le solde de leur compte.

Aussi a-t-on déjà proposé, par exemple dans US-4 587 409, un dispositif de portefeuille dont un panneau est destiné à recevoir des moyens de calcul et dont l'autre est prévu pour loger différentes cartes de crédit. Un tel dispositif est relativement volumineux, complexe, puisqu'il est prévu pour plusieurs cartes de paiement, sans toutefois permettre à son utilisateur de pallier un oubli éventuel d'enregistrement des opérations effectuées. Dans un autre dispositif du type portefeuille tel que décrit dans AU-46 568, par conséquent aussi relativement volumineux, on prévoit d'associer au volet du portefeuille propre à recevoir une carte de crédit des moyens destinés à détecter la condition d'absence d'une carte dans le compartiment prévu pour la recevoir et des moyens de signalisation destinés à engendrer un signal informant l'utilisateur de cette absence. Un tel dispositif ne permet donc pas, lui non plus, de résoudre le problème qui est à la base de la présente invention et qui est celui de fournir un dispositif de faibles poids et encombrement pour contenir tout en la protégeant une carte de crédit, carte bancaire, carte à prépaiement ou analogue dont le suivi des opérations effectuées peut être enregistré, mémorisé et visualisé sans risque d'oubli par son utilisateur.

Ce problème est résolu, dans un étui pour carte de crédit, carte bancaire, carte de prépaiement ou analogue comportant un compartiment adapté pour recevoir ladite carte, des moyens interrupteurs disposés dans ledit compartiment de façon à pouvoir être actionnés par ladite carte et des moyens avertisseurs commandés par les moyens interrupteurs, par le fait que l'étui comporte en outre des moyens de calcul équipés d'une mémoire dont le contenu reste mémorisé même lorsque lesdits moyens sont hors fonction, des moyens arithmétiques et/ou logiques permettant d'effectuer, à l'aide d'un clavier, des opérations dont les résultats sont enregistrés dans ladite mémoire ainsi que des moyens d'affichage du contenu de la mémoire, et par le fait que lesdits moyens avertisseurs sont connectés aux moyens de calcul et aux moyens interrupteurs par un circuit tel que les moyens avertisseurs sont déclenchés lorsque ladite carte, après avoir été retirée dudit compartiment, y est réintroduite et sont arrêtés par l'entrée d'une opération, au moyen dudit clavier, dans la mémoire.

Cette dernière comporte de préférence plusieurs registres dans lesquels les résultats des opérations effectuées sont chronologiquement enregistrés, et datés grâce à une horloge et un dateur associés aux moyens de calcul et de mémoire, le contenu de ces registres pouvant être appelé et affiché au moyen du clavier.

Selon un mode de réalisation de l'invention, la mémoire comporte un premier registre dans lequel est enregistré le montant initial du compte et la date d'enregistrement de ce montant, un second registre dans lequel est enregistré le solde du compte à une seconde date, également enregistrée, et une série de registres dans lesquels sont chronologiquement enregistrés les montants et dates des opérations effectuées entre la première date et la seconde date.

On voit ainsi immédiatement les avantages que présente l'invention. L'utilisateur est immédiatement averti par les moyens avertisseurs, de préférence sonores, lorsqu'il remet la carte dans son étui, qu'il doit inscrire le montant de la transaction dans la mémoire des moyens de calcul, de sorte qu'il ne risque pas d'oublier d'effectuer cette opération.

En variante, les moyens avertisseurs sont rendus opératoires après extraction de la carte hors de son étui et, dans un tel cas, après qu'un certain délai se soit écoulé à partir de cette extraction.

Dans un mode de réalisation préféré, les moyens avertisseurs ne sont arrêtés que lorsqu'une opération est effectivement entrée dans la mémoire des moyens de calcul (le montant inscrit pouvant être nul, par exemple lorsque la carte a été retirée par erreur de l'étui).

Les moyens interrupteurs sont constitués, le plus simplement, par des contacts à lame ou, en variante, par un dispositif à cellule photosensible.

L'utilisateur peut, à tout moment, afficher le contenu de la mémoire et connaître ainsi le solde de son compte. Dans le mode de réalisation préféré suivant lequel la mémoire comporte plusieurs registres, l'utilisateur peut appeler successivement lesdits registres et les afficher de sorte qu'il dispose ainsi d'un relevé complet des opérations effectuées depuis l'enregistrement du montant initial, dans la mesure naturellement des capacités de la mémoire.

Dans une réalisation avantageuse l'accès à la mémoire n'est autorisé qu'après qu'ait été entré un code secret.

Selon l'invention, également, les moyens de calcul et de mémoire sont organisés pour permettre l'effacement d'une ou de plusieurs opérations enregistrées en mémoire, par exemple pour libérer cette dernière après vérification des opérations effectuées à réception d'un relevé bancaire ou analogue.

D'autres caractéristiques et avantages de l'invention apparaîtront à la lecture de la description qui va suivre de modes de réalisations préférés de l'invention, faite en référence au dessin annexé dans lequel :
- la figure 1 est une vue en plan de face d'un étui selon l'invention pour une première forme de réalisation ;
- la figure 2 est une vue en bout, de droite, de l'étui de la figure 1 ;
- la figure 3 est une vue en plan de la face arrière de l'étui de la figure 1 ;
- la figure 4 est une vue en perspective d'une autre forme de réalisation ;
- la figure 5 est une vue en coupe selon la ligne 5-5 de la figure 4 ;
- la figure 5a est une vue partielle analogue à celle de la figure 5 mais pour une autre condition de la carte ;
- la figure 6 est une en coupe selon la ligne 6-6 de la figure 4 ;
- la figure 7 est un schéma électrique.

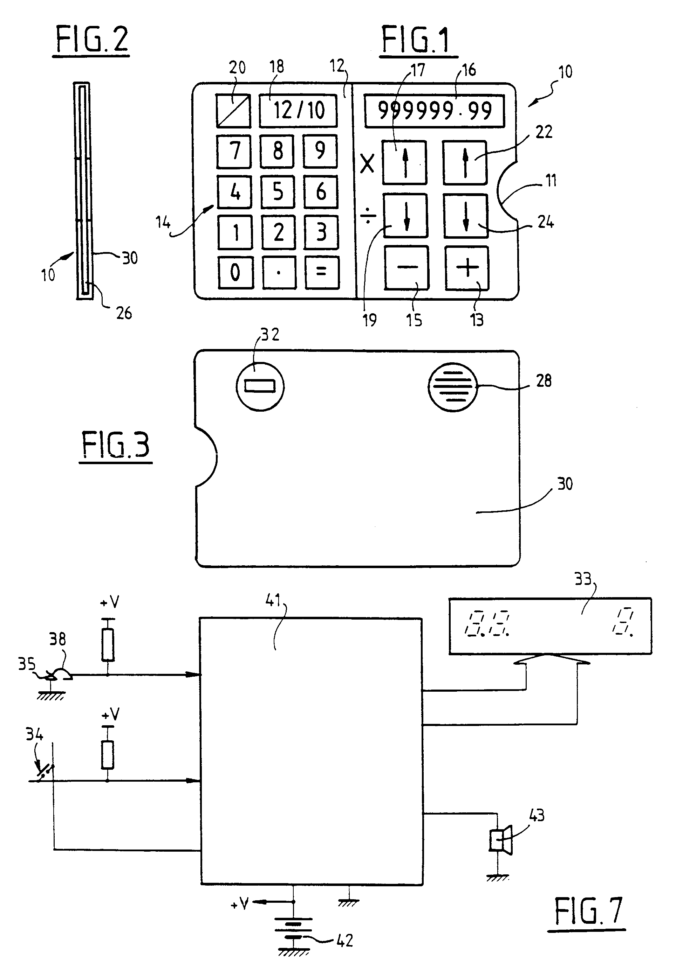

On se réfère d'abord aux figures 1 à 3 qui illustrent une première forme de réalisation d'un dispositif selon l'invention. Dans cette forme de réalisation le dispositif 10 d'étui pour carte de crédit, carte bancaire, carte à prépaiement ou analogue (non représentée) est de forme générale rectangulaire à coins arrondis et de dimensions très voisines de celles d'une telle carte, c'est-à-dire environ 85 x 55 mm. Un des bords de petites dimensions de l'étui présente une échancrure 11 facilitant l'introduction et l'extraction de la carte dans et hors de l'étui dont la face supérieure est formée par une calculette 12 qui y est incorporée. Celle-ci, comporte, comme bien visible sur la figure 1, un clavier 14, un écran 16 d'affichage de données, un écran 18 d'affichage de date et un interrupteur 20 de mise en fonction et hors fonction. Des touches 13 et 15 d'addition et de soustraction, respectivement, de même que des touches 17, 19 et 22, 24 dont le rôle sera précisé ci-après sont également prévues sur la face avant de la calculette 12.

Conformément au mode de réalisation préféré de l'invention, la mémoire de la calculette 12, dont le contenu reste mémorisé même lorsque la calculette est mise hors fonction, comporte plusieurs registres dans lesquels sont respectivement enregistrés le montant initial du compte et la date d'enregistrement, le dernier solde du compte et, par ordre chronologique, les montants et dates de toutes les opérations effectuées depuis l'enregistrement du montant initial. Il est évident que des moyens peuvent être prévus pour remplacer le montant initial, par exemple, par le dernier solde, lorsque le nombre des opérations effectuées dépasse la capacité de la mémoire.

Les divers registres peuvent être appelés successivement et leur contenu affiché au moyen des touches 17, 19, 22 et 24, l'affichage faisant apparaître la date grâce à une horloge et un dateur associés à la calculette et le montant d'une dépense s'il y a pression d'une des touches 17, 19 placées au-dessus de la touche 15 "-", ou d'un encaissement s'il y a pression d'une des touches 22 ou 24 placées au-dessus de la touche "+", 13.

Il y a lieu de noter qu'il est également possible, sans sortir du cadre de l'invention, de prévoir l'utilisation de la calculette 12 pour d'autres fonctions classiques, en isolant temporairement des circuits de calcul les registres de mémoire et les circuits réservés à l'enregistrement et aux manipulations des données relatives aux opérations effectuées avec la carte de crédit ou analogue, par exemple par actionnement d'une touche de fonction appropriée de la calculette.

Les moyens de calcul et de mémoire sont en outre organisés pour permettre l'effacement d'une ou de plusieurs opérations enregistrées en mémoire, par exemple pour libérer cette dernière après vérification des opérations effectuées à réception d'un relevé bancaire ou analogue.

Comme représenté sur la figure 2, l'étui 10 comporte une fente d'accès 26, par laquelle la carte peut être introduite dans un compartiment prévu pour la recevoir. Dans ce compartiment est disposé un interrupteur (non représenté) qui, dans un mode de réalisation préféré est relié à la calculette et qui est actionné par la carte de crédit ou analogue lorsque celle-ci est convenablement en place.

Lorsque la carte est retirée de l'étui puis ensuite remise en place, les signaux émis par l'interrupteur sont analysés par la calculette qui déclenche alors un avertisseur sonore 28 prévu, de préférence, dans la paroi de la face arrière 30 de l'étui 10. L'avertisseur 28 reste actionné jusqu'à ce qu'une opération soit effectuée au moyen du clavier de la calculette et rentrée en mémoire à l'aide de la touche "-" pour une dépense ou "+" pour un encaissement.

La calculette arrête alors l'avertisseur sonore 28.

On a désigné par 32 sur la figure 3, une pile servant à alimenter la calculette 12 et l'avertisseur 28.

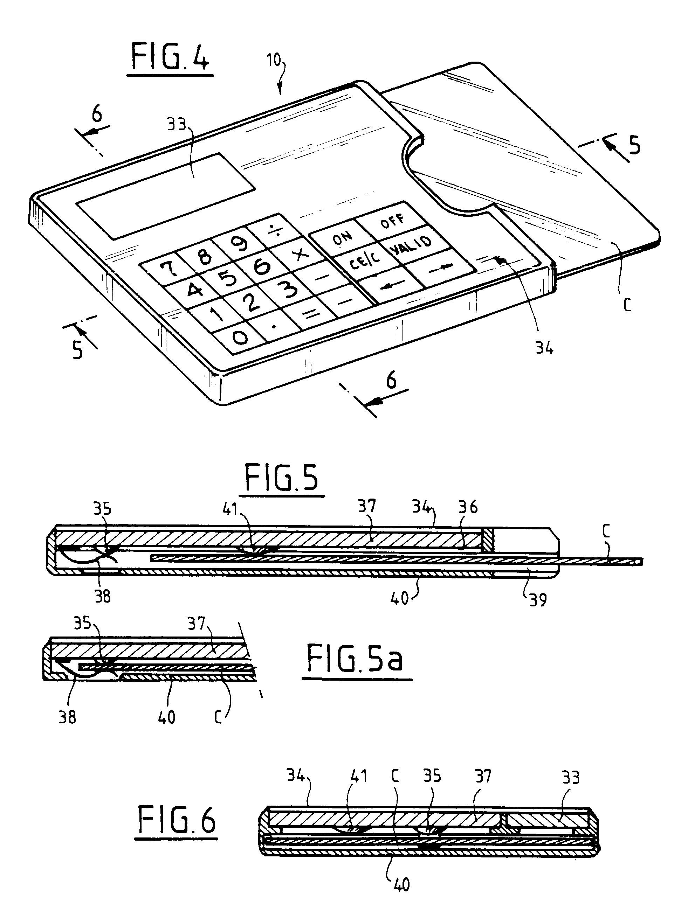

On se réfère maintenant aux figures 4 à 7 illustrant une autre forme de réalisation. Dans celle-ci l'étui 10 est semblable à l'étui de la réalisation décrite précédemment en référence aux figures 1 à 3 sous réserve d'une disposition différente des éléments de la calculette 12 dont l'écran d'affichage est montré schématiquement en 33 et le clavier en 34. Dans cette forme de réalisation les moyens d'interrupteurs sont ménagés par une lame élastique 38 et un plot 35 prévus sur la face interne 36 d'une paroi 37 portant le circuit imprimé de la calculette 12 et qui limite avec une paroi parallèle 40 le logement 39 de réception de la carte de crédit, carte bancaire, carte à prépaiement ou analogue, C. Lorsque celle-ci est complètement introduite dans le compartiment 39 la condition est celle montrée sur la figure 5a où la carte est interposée entre le plot 35 et la lame 38 ; dans cette condition la carte C est également en regard d'un micro-contrôleur 41.

Comme illustré sur la figure 7, le micro-contrôleur 41 qui renferme une horloge et un dateur est alimenté par une pile 42 et est relié à un avertisseur sonore 43, le plus simplement un bruiteur piézoélectrique, d'une part, au dispositif d'affichage 33 d'autre part, ainsi qu'aux moyens d'interrupteurs 35, 38 et au clavier matriciel 34, lequel peut être réalisé sous forme d'une membrane rapportée au-dessus du circuit imprimé 37.

En variante, les moyens d'interrupteurs 35, 38 sont constitués par un organe à cellule photosensible, le fonctionnement du dispositif à interrupteur "mécanique" ou "optique" étant le même que celui du dispositif décrit en référence aux figures 1 à 3 en ce qui concerne les fonctions et modes d'utilisation de la calculette.

## Revendications

1. Etui pour carte de crédit, carte bancaire, carte à pré-paiement ou analogue comportant :
- un compartiment adapté pour recevoir ladite carte ;
- des moyens interrupteurs disposés dans ledit compartiment de façon à pouvoir être actionnés par ladite carte ; et
- des moyens avertisseurs commandés par les moyens interrupteurs,
caractérisé en ce qu'il comporte en outre des moyens de calcul (12, 41) équipés d'une mémoire dont le contenu reste mémorisé même lorsque les moyens de calcul sont hors fonction, des moyens arithmétiques et/ou logiques permettant d'effectuer, à l'aide d'un clavier (14, 13, 16, 17, 34) des opérations dont les résultats sont enregistrés dans ladite mémoire ainsi que des moyens (16, 18, 33) pour afficher le contenu de la mémoire, et en ce que lesdits moyens avertisseurs (28, 43) sont connectés aux moyens de calcul (12, 41) et aux moyens interrupteurs (35, 38) par un circuit tel que les moyens avertisseurs sont déclenchés lorsque ladite carte (C), après avoir été retirée dudit compartiment (39), y est réintroduite et sont arrêtés par l'entrée d'une opération, au moyen dudit clavier (14, 34), dans la mémoire.

2. Etui selon la revendication 1, caractérisé en ce que la mémoire comporte plusieurs registres dans lesquels les résultats des opérations effectuées sont chronologiquement enregistrés et datés grâce à une horloge et à un dateur associés aux moyens de calcul et de mémoire (12, 41) et en ce qu'il comporte des moyens pour appeler et afficher le contenu de chacun de ces registres.

3. Etui selon l'une quelconque des revendications précédentes, caractérisé en ce que la mémoire comporte un premier registre dans lequel est enregistré le montant initial du compte et la date d'enregistrement de ce montant, un second registre dans lequel sont enregistrés le solde du compte et une seconde date, et une série de registres dans lesquels sont chronologiquement enregistrés les montants et dates des opérations effectuées entre la première date et la seconde date.

4. Etui selon l'une quelconque des revendications précédentes, caractérisé en ce que l'accès à la mémoire n'est autorisé qu'après qu'ait été entré un code secret.

5. Etui selon l'une quelconque des revendications précédentes, caractérisé en ce que les moyens interrupteurs (35, 38) sont du type mécanique ou optique à cellule photo-sensible.

6. Etui selon l'une quelconque des revendications précédentes, caractérisé en ce que les moyens de calcul et de mémoire sont organisés pour permettre l'effacement d'une ou de plusieurs opérations enregistrées en mémoire.

## Claims

1. Holder for credit card, bank card, prepayment card or the like including:
- a compartment suitable for receiving the said card;
- on/off switch means arranged in the said compartment so as to be able to be actuated by the said card; and
- warning means controlled by the on/off switch means,
characterized in that it furthermore includes calculating means (12, 41) equipped with a memory store, the contents of which remain stored even when the calculating means are turned off, arithmetic and/or logic means making it possible to perform, with the aid of a keypad (14, 13, 16, 17, 34), operations whose results are recorded in the said memory store, as well as means (16, 18, 33) for displaying the contents of the memory store, and in that the said warning means (28, 43) are connected to the calculating means (12, 41) and to the on/off switch means (35, 38) by a circuit such that the warning means are triggered when the said card (C), after having been withdrawn from the said compartment (39), is reinserted therein and are stopped by entering an operation into the memory store by means of the said keypad (14, 34).

2. Holder according to Claim 1, characterized in that the memory store includes several registers in which the results of the operations performed are chronologically recorded and dated by virtue of a clock and a date logger which are associated with the calculating and memory store means (12, 41) and in that it includes means for calling up and displaying the contents of each of these registers.

3. Holder according to either of the preceding claims, characterized in that the memory store includes a first register in which is recorded the initial amount in the account and the date of recording of this amount, a second register in which are recorded the balance of the account and a second date, and a series of registers in which are chronologically recorded the amounts and dates of the operations performed between the first date and the second date.

4. Holder according to any one of the preceding claims, characterized in that access to the memory store is permitted only after a secret code has been entered.

5. Holder according to any one of the preceding claims, characterized in that the on/off switch means (35, 38) are of the mechanical or photocell optical type.

6. Holder according to any one of the preceding claims, characterized in that the calculating and memory store means are organized to allow the deletion of one or more operations recorded in memory.

## Patentansprüche

1. Etui für eine Kreditkarte, Bankomat-Karte, Vorabzahlungskarte oder ähnlichem, welches aufweist:
- einen Teilbereich, welcher zur Aufnahme der Karte geeignet ist,
- Unterbrechermittel, welche in diesem Teilbereich in der Weise angeordnet sind, daß sie durch die Karte betätigt werden können,
- Hinweismittel, die durch die Unterbrechermittel gesteuert werden,
**dadurch gekennzeichnet, daß** es weiters aufweist: Rechnermittel (12, 41), die mit einem Speicher versehen sind, dessen Inhalt gespeichert bleibt auch wenn die Rechnermittel außer Betrieb sind, arithmetische und/oder logische Mittel, die mit Hilfe einer Tastatur (14, 13, 16, 17, 34) das Ausführen von Befehlen ermöglichen, deren Ergebnisse in diesem Speicher, sowie in Mitteln (16, 18, 33) zum Anzeigen des Speicherinhaltes eingetragen werden, **und daß** die Hinweismittel (28, 43) mit den Rechnermitteln (12, 41) und mit den Unterbrechermitteln (35, 38) über eine Schaltung in der Weise verbunden sind, daß die Hinweismittel ausgelöst werden, wenn die Karte (C), nachdem sie aus dem Teilbereich (39) entnommen wurde, wieder darin eingeführt wird, und bei Eingabe eines Befehls mittels der Tastatur (14, 34) in den Speicher angehalten werden.

2. Etui nach Anspruch 1, **dadurch gekennzeichnet, daß** der Speicher eine Mehrzahl von Register aufweist, in welchen die Resultate von ausgeführten Befehlen chronologisch eingetragen und mittels einer Uhr und eines Datumgebers datiert werden, welche den Rechnermitteln und dem Speicher (12, 41) zugeordnet sind, **und daß** es Mittel zum Abrufen und Anzeigen jedes Registerinhaltes aufweist.

3. Etui nach einem der vorigen Ansprüche, **dadurch gekennzeichnet, daß** der Speicher ein erstes Register, in welchem der Anfangsstand eines Kontos und das Eintragungsdatum dieses Standes eingetragen sind, und ein zweites Register aufweist, in welchem der Soll-/Habenstand des Kontos und ein zweites Datum eingetragen sind, und eine Reihe von Registern, in welchen chronologisch die Beträge und Daten der zwischen dem ersten und dem zweiten Datum ausgeführten Befehlen eingetragen sind.

4. Etui nach einem der vorigen Ansprüche, **dadurch gekennzeichnet, daß** der Zugriff auf den Speicher nur nach Eingabe eines Geheimcodes ermöglicht ist.

5. Etui nach einem der vorigen Ansprüche, **dadurch gekennzeichnet, daß** die Unterbrechermittel (35, 38) mechanisch oder durch eine photoempfindliche optische Zelle realisiert sind.

6. Etui nach einem der vorigen Ansprüche, **dadurch gekennzeichnet, daß** die Rechnermittel und der Speicher zum Löschen eines oder mehrere in dem Speicher eingetragenen Befehlen eingerichtet sind.
